# EUROPEAN PATENT SPECIFICATION

(11) **EP 1 684 967 B1**
(45) Date of publication and mention of the grant of the patent: **29.12.2010**
(21) Application number: 04800680.3
(22) Date of filing: 03.11.2004
(51) Int. Cl.: B29C 63/06, F16L 55/165

(54) **LONGITUDINALLY REINFORCED CURED IN PLACE LINER**
LÄNGSVERSTÄRKTE, IN-SITU AUSGEHÄRTETE AUSKLEIDUNG
GAINE DURCIE SUR PLACE ET RENFORCEE LONGITUDINALEMENT

(30) Priority: 07.11.2003 US 704487
(43) Date of publication of application: 02.08.2006
(73) Proprietor: Insituform Holdings (UK) Limited, Ossett, West Yorkshire WFS 9SQ (GB); INA Acquisition Corp., Wilmington, DE 19801 (US)
(72) Inventor: DRIVER, Franklin, Thomas, St. Charles, MO 63304 (US); WANG, Weiping, Ballwin, MO 63021 (US)
(74) Representative: Cordina, Kevin John
(86) International application number: PCT/US2004/036621
(87) International publication number: WO 2005/046973

(56) References cited:
- EP-A- 0 542 639
- WO-A-90/11175
- WO-A-98/31964
- WO-A-03/038331
- GB-A- 1 601 234
- US-A- 5 778 938
- US-A1- 2003 113 489

## Description

### BACKGROUND OF THE INVENTION

This invention relates to cured in place liners for trenchless rehabilitation of existing conduits and pipelines, and more particularly to a cured in place liner longitudinally reinforced with a scrim on a surface of a liner in lay flat condition between the resin impregnable layer and an outer impermeable coating suitable for trenchless rehabilitation of existing conduits by pulling in and inflating.

It is generally well known as for instance from US 2003/113489A1 that existing conduits and pipelines, particularly underground pipes, such as sanitary sewer pipes, storm sewer pipes, water lines and gas lines that are employed for conducting fluids frequently require repair due to fluid leakage. The leakage may be inward from the environment into the interior or conducting portion of the pipelines. Alternatively, the leakage may be outward from the conducting portion of the pipeline into the surrounding environment. In either case of infiltration or exfultration, it is desirable to avoid this type of leakage.

The leakage in the existing conduit may be due to improper installation of the original pipeline, or deterioration of the pipe itself due to normal aging, or the effects of conveying corrosive or abrasive material. Cracks at, or near pipe joints may be due to environment conditions such as earthquakes, or the movement of large vehicles on the overhead surface, or similar natural or man-made vibrations, or other such causes. Regardless of the cause, such leakages are undesirable and may result in waste of the fluid being conveyed within the pipeline, or result in damage to the surrounding environment and possible creation of dangerous public health hazards. If the leakage continues it can lead to structural failure of the existing conduit due to loss of soil and side support of the conduit.

Because of ever increasing labor and machinery costs, it is increasingly more difficult and less economical to repair underground pipes or portions that may be leaking by digging up the existing pipe and replacing the pipe with a new one. As a result, various methods have been devised for the in place repair or rehabilitation of existing pipelines. These new methods avoid the expense and hazards associated with digging up and replacing the pipe or pipe sections, as well as the significant inconvenience to the public during construction. One of the most successful pipeline repair or trenchless rehabilitation processes that is currently in wide use is called the Insituform® Process. The Insituform Process is described in detail in U.S. Patents No. 4,009,063, No. 4,064,211 and No. 4,135,958.

In the standard practice of the Insituform Process an elongated flexible tubular liner of a felt fabric, foam or similar resin impregnable material with an outer impermeable coating that has been impregnated with a thermosetting curable resin is installed within the existing pipeline. In the most widely practiced embodiment of that process, the liner is installed utilizing an eversion process, as described in the '211 and '958 Insituform patents. In the eversion process, radial pressure applied to the interior of an everted liner presses it against and into engagement with the inner surface of the pipeline as the liner unfolds along the length of the pipeline. The Insituform Process is also practiced by pulling a resin impregnated liner into the conduit by a rope or cable and using a separate fluid impermeable inflation bladder or tube that is everted within the liner to cause the liner to cure against the inner wall of the existing pipeline. Such resin impregnated liners are generally referred to as "cured-in-place-pipes" or "CIPP liners" and the installation is referred to a CIPP installation.

Conventional cured in place flexible tubular liners for both the eversion and pull-in-and-inflate CIPP installations have an outer smooth layer of relatively flexible, substantially impermeable polymer coating in its initial state. The outer coating allows a resin to be impregnated into the inner layer of resin impregnable material, such as felt. When everted, this impermeable layer ends up on the inside of the liner with the resin impregnated layer against the wall of the existing pipeline. As the flexible liner is installed in place within the pipeline, the pipeline is pressurized from within, preferably utilizing an eversion fluid, such as water or air to force the liner radially outwardly to engage and conform to the interior surface of the existing pipeline. Cure of the resin is initiated by introduction of hot curing fluid, such as water into the everted liner through a recirculation hose attached to the end of the everting liner. The resin impregnated into the impregnable material then cures to form a hard, tight fitting rigid pipe lining within the existing pipeline. The new liner effectively seals any cracks and repairs any pipe section or pipe joint deterioration in order to prevent further leakage either into or out of the existing pipeline. The cured resin also serves to strengthen the existing pipeline wall so as to provide added structural support for the surrounding environment.

When tubular cured in place liners are installed by the pull-in-and-inflate method, the liner is impregnated with resin in the same manner as in the eversion process and pulled into and positioned within the existing pipeline in a collapsed state. In a typical installation, a downtube, inflation pipe or conduit having an elbow at the lower end is positioned within an existing manhole or access point and an everting bladder is passed through the downtube, opened up and cuffed back over the mouth of the horizontal portion of the elbow and inserted into the collapsed liner. The collapsed liner within the existing conduit is then positioned over and secured to the cuffed back end of the inflation bladder. An everting fluid, such as water, is then fed into the downtube and the water pressure causes the inflation bladder to push out of the horizontal portion of the elbow and cause the collapsed liner to expand against the interior surface of the existing conduit. The eversion of the inflation bladder continues until the bladder reaches and extends into the downstream manhole or second access point. At this time the liner pressed against the interior surface of the existing conduit is allow to cure. Cure is initiated by introduction of hot curing water introduced into the inflation bladder in much the same manner as the recirculation line tied to the end of the everting bladder to cause the resin in the impregnated layer to cure.

After the resin in the liner cures, the inflation bladder may be removed or left in place in the cured liner. Both the pull-in and inflate method as well as the eversion method typically require man-access to restricted manhole space on several occasions during the process. For example, man-access is required to secure the everting liner or bladder to the end of the elbow and insert it into the collapsed liner.

Regardless of how the liner is to be installed a curable thermosetting resin is impregnated into the resin absorbent layers of a liner by a process referred to as "wet-out." The wet-out process generally involves injecting resin into resin absorbent layers through an end or an opening formed in the outer impermeable film, drawing a vacuum and passing the impregnated liner through nip rollers as is well known in the lining art. A wide variety of resins may be used, such as polyester, vinyl esters, epoxy resins and the like, which may be modified as desired. It is preferable to utilize a resin which is relatively stable at room temperature, but which cures readily when heated with air, steam or hot water, or subjected to appropriate radiation, such as ultra-violet light.

One such procedure for wetting out a liner by vacuum impregnation is described in Insituform U.S. Patent No. 4,366,012. When the liner has inner and outer impermeable layers, the tubular liner may be supplied flat and slits formed on opposite sides of the flattened liner and resin injected and on both sides as described in the '063 Patent. Another apparatus for wetting out at the time of installation while drawing a vacuum at the trailing end of the liner is shown in U.S. Patent No. 4,182,262.

Recent efforts have been made to modify the pull-in and inflate method to utilize air to evert a bladder into the pulled-in liner from a proximal access point. When the everting bladder reaches the distal access point, steam is introduced into the proximal access point to initiate cure of the resin impregnated layer. This process offers the advantage of faster cure due to the increased energy carried by the steam as the curing fluid. However, the process still requires eversion of a bladder into the pulled-in impregnated liner. Efforts to avoid this step of everting the bladder into the pulled-in liner include performing the eversion step above ground. For example, in U.S. Patent No. 6,270,289, the process includes everting a calibration hose into a flat-lying lining hose above ground prior to pulling the hose assembly into the existing conduit. This process avoids the eversion below grade, but is severely limited into the length of lining that can be laid out above ground prior to pulling-in.

A further suggestion to avoid this eversion is to manufacture a liner having an inner coating and an outer coating so that a curing fluid can be introduced directly into a pulled-in liner. The disadvantages here involves the difficulty faced when trying to impregnate the resin impregnable material disposed between the inner and outer impermeable coatings. The outer coating remains essential for handling the impregnated liner and to allow the liner to be pulled into the existing conduit and the inner coating is desired to all for curing with the steam.

A typical 20.32cm (8 inch) diameter 6 mm thick liner weighs about 213g (7.5 ounces) per 30.5cm (foot) prior to wet out. About 1.36kg (3 pounds) of resin per 30.5cm (foot) are impregnated, resulting in almost a seven fold increase in weight to about 1.6kg (3.5 pounds) per 30.5cm (foot). In this case, a 61m (200 foot) length of liner subject to a load of 159kg (350 pounds) stretches about 3 percent in length. At 2272kg (5000 pounds) of load the 20.3cm (8 inch) liner will stretch as much as 35 to 40 percent. Thus, a typical 91m (300 foot) liner between manholes may stretch as much as 9.1m (30 feet). The increase in weight of the liner for larger diameter liners makes the load required for pull-in even more staggering. Thus, there are significant limitations on the lengths of liner that can be pulled in. The same is true to a greater extent for larger diameter liners.

One solution to this problem involves addition of a layer of reinforcing fibers into the liner. For example, in U. S. Patent No. 5, 868, 169 a web or mesh of reinforcing fibers is stitched or flame bonded to one of the resin absorbent layers of the liner. The webs disclosed are in a graphical or grid pattern, include longitudinal fiber held together by radial fibers, cross-hatched or a cross-hatched web with randomly oriented fibers.

While these suggestions to increase longitudinal strength are available, there are difficulties in handling webs and attaching them to one of the resin absorbent layers as a heavy web tends to hinder impregnation and reduce the circumferential stretch need for CIPP installation. Accordingly, it is desirable to provide a longitudinally reinforced liner that can be easily manufactured and avoid the difficulties faced in the prior art.

### SUMMARY OF THE INVENTION

In accordance with the invention, a longitudinally reinforced resin impregnated cured in place liner suitable for pull-in and inflate rehabilitation of existing pipelines is provided. The liner may be continuously formed from a length of a resin absorbent material having an impermeable layer bonded to one surface formed into a tubular shape and sealed with the impermeable layer on the inside of the tube. The tube may be wrapped with additional layers of resin absorbent material in tubular form and impregnated with a thermosetting resin. Prior to final placement of the outer coating, a scrim having greater strength in the warp direction is applied to a surface of the flattened impregnated tube. Generally, the scrim will be applied in a width to cover about one-quarter to one-half of the tube circumference and is applied to the flattened bottom surface. An outer impermeable layer maybe applied to the tube by everting a tube of impermeable material onto the inner tubular member as the tube and scrim are fed into a tubular stuffing device, or by wrapping and sealing continuously with an impermeable film.

The scrim provides longitudinal reinforcement and is positioned at the bottom half of the liner and acts as a pull-in sled. This increase in longitudinal strength allows for pulling-in of long lengths of liner, and substantially reduces stretch of the resin impregnated liner during pull-in.

An object of the invention is to provide a method according to claim 1 and a CIPP according to claim 7.

Yet another object of the invention is provide an improved method of continuously manufacturing a longitudinally reinforced resin impregnated cured in place liner having an inner and outer impermeable layer.

Still another object of the invention is to provide a method of applying a longitudinal reinforcement to a CIPP tube after the impregnable layer is wet-out with resin.

Yet a further object of the invention is to provide a method of manufacturing a cured in place liner having inner and outer impermeable layers for pull-in and inflate trenchless pipeline installation.

Still other objects and advantages of the invention will in part be be apparent from the specification and the dependent claims.

The invention accordingly comprises the several steps and the relation of one or more of such steps with respect to each of the others, the apparatuses embodying features of construction, combinations and arrangement of parts that are adapted to effect such steps, and the products that possess the characteristics, features, properties, and the relation of components, which are exemplified in the following detailed disclosure, and the scope of the invention will be indicated in the claims.

### BRIEF DESCRIPTION OF THE DRAWINGS

For a fuller understanding of the invention, reference is had to the following description taken in connection with the accompanying drawing(s), in which:

FIG. 1 is a perspective view of a length of a typical resin impregnable cured in place liner suitable for use in lining an existing pipeline of the type generally in use today and well known in the art;

FIG. 2 is a cross-section view of a cured in place liner having longitudinal reinforcement and inner and outer impermeable layers constructed and arranged in accordance with the invention;

FIG. 3 is a schematic view of the apparatus used for preparing the inner portion of the liner having an outer felt layer with an inner high temperature polymeric layer used in connection with preparation of the cured in place liner of FIG. 2;

FIG. 4 is a cross-sectional view showing the structure of the inner portion of the liner produced by the apparatus of FIG. 3 before being impregnated in accordance with the invention;

FIG. 5 is a schematic in elevation showing resin impregnation and mating with longitudinal reinforcement and wrapping of the tubular member of FIG. 4 for preparing an impregnated CIPP liner in accordance with the invention;

FIG. 6 is a cross-sectional view of the edge sealer in the sealing and wrapping apparatus of FIG. 3 taken along line 6-6;

FIG. 7 is a cross-section of the liner prepared by the apparatus of FIG. 5;

FIG. 8 is a schematic in elevation showing wrapping of the tubular member exiting a resin impregnation apparatus with an outer coating by passing the wet out liner through a tube stuffer having a tubular wrapping stored thereon; and

FIG. 9 is a cross-section of a liner wrapped by the apparatus of FIG. 8.

### DESCRIPTION OF THE PREFERRED EMBODIMENTS

A resin impregnated cured in place liner prepared in accordance with the invention has a longitudinal reinforcing scrim so that is can be installed by the pull-in-and-inflate method. When prepared with an integral internal impermeable layer it may be inflated and cured with a heated fluid without the use of an inflation bladder. A liner with inner impermeable layer and longitudinal reinforcement is prepared in continuous lengths. It may be impregnated as it is assembled in view of the increased effort necessary to impregnate a flattened liner having a resin absorbent material between an inner and an outer coating using convention vacuum impregnation technology.

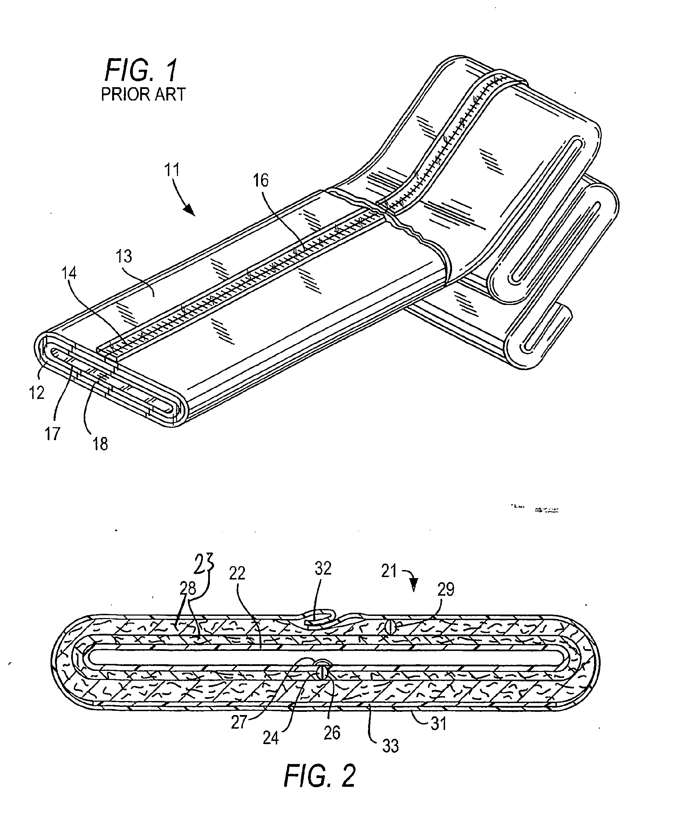

FIG. 1 illustrates a flexible cured in place liner 11 of the type generally in use today and well known in the art. Liner 11 is formed from at least one layer of a flexible resin impregnable material, such as a felt layer 12 having an outer impermeable polymer film layer 13. Felt layer 12 and outer polymer layer 13 are stitched along a seam line 14 to form a tubular liner. A compatible thermoplastic film in a form of a tape or extruded material 16 is placed on or extruded over seam line 14 in order to ensure the impermeability of liner 11. In the embodiment illustrated in FIG. 1 and used throughout this description, liner 11 includes an inner tube of a second felt layer 17 also stitched along a seam line 18 positioned at a point in the tube other than the location of seam line 14 in outer felt layer 12. Outer felt layer 12 with polymer layer 13 is then formed around inner tubular layer 17. After impregnation liner 11 in a continuous length is stored in a refrigeration unit to suppress premature cure of the resin. Liner 11 is then cut to a desired length after being pulled into the existing pipeline, or is cut prior to being everted into the existing pipeline.

Liner 11 of the type illustrated in FIG. 1 is impermeable to water and air. This will allow use in an air or water eversion as described above. However, in a pull in and inflate installation in accordance with the invention, the outer coating on the liner need only be sufficiently impermeable to allow for easy handling wet-out and retention of resin and to prevent damage to the liner as it is pulled into the existing pipeline.

For larger liner diameters, several layers of felt or resin impregnable material may be used. Felt layers 12 and 17 may be natural or synthetic flexible resin absorbable material, such as polyester, acrylic polypropylene, or inorganic fibers such as glass and carbon. Alternatively, the resin absorbent material may be a foam. Impermeable film 13 on outer impregnable layer 12 may be a polyolefin, such as polyethylene or polypropylene, a vinyl polymer, such as polyvinyl chloride, or a polyurethane as is well known in the art. Any form of sewing, adhesive bonding or flame bonding, or any other convenient means can be used to join the material into tubes. In the initial step in all trenchless rehabilitation installations, the existing pipeline is prepared by cleaning and videotaping.

Referring now to FIG. 2, a longitudinally reinforced cured in place liner 21 prepared in accordance with the invention is shown in cross-section. Liner 21 is constructed in similar fashion to convention liner 11, but includes an inner impermeable layer 22 that has a thin felt or resin impregnable layer 23 bonded thereto. Inner felt layer 23 and impermeable layer 22 have been sewn along a seam line 24 by a row of stitches 26 and sealed with a tape 27 applied over stitches 26. An outer felt layer 28 is wrapped about inner thin felt layer 23 and formed into a tube by stitches 29. A longitudinal reinforcing scrim 33 is disposed on the bottom of outer felt layer 28. Finally, an outer layer or wrapping 31 is formed into a tube with an edge seal 32 and continuously everted over outer felt layer 28 so that an edge seal 32 is encapsulated under outer impermeable layer 31 as will be described in more detail below.

By manufacturing a liner in this manner, it is not necessary to evert the liner during installation or evert an inflation bladder after the liner has been pulled into the existing conduit. Longitudinal reinforcement of scrim 33 allows pulling-in of longer length while avoiding stretch and inherent thinning of liner wall.

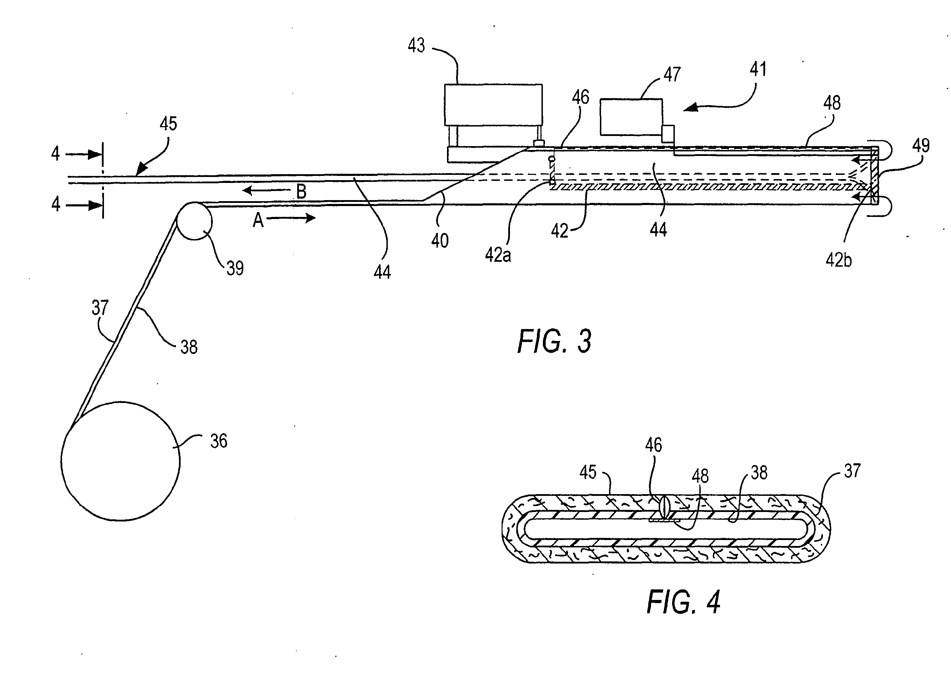

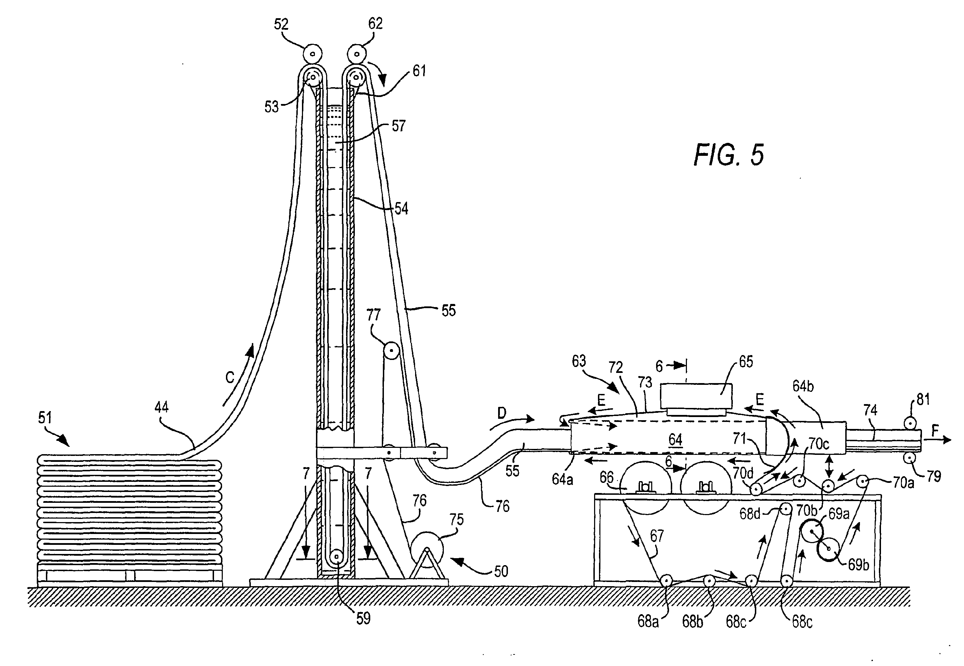

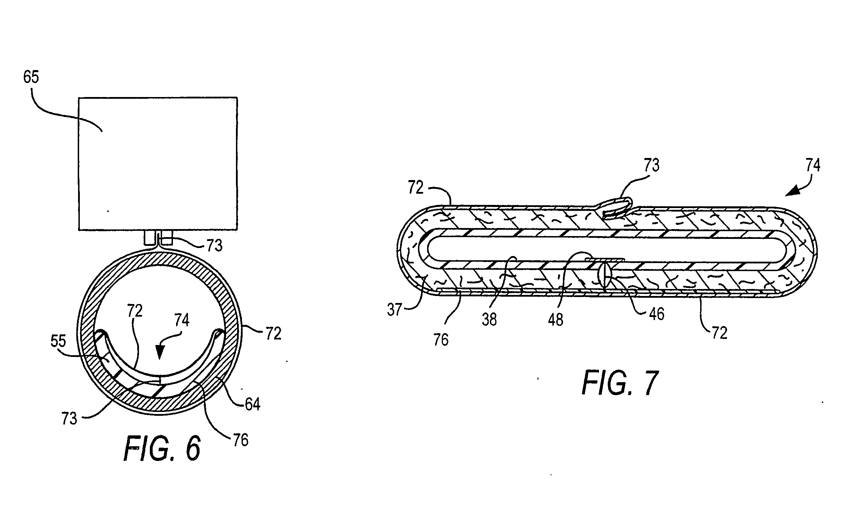

Felt layers 23 and 28 may be impregnated in the usual manner using vacuum. Alternatively, felt layers 23 and 28 are first impregnated with resin, scrim 33 is applied and then outer impermeable coating 31 is applied. This avoids the difficulty with impregnating a finished liner having a reinforcing scrim and felt layers between an inner and outer impregnable layer. Liner 21 is manufactured from endless rolls of flat coated felt and plain felt and continuously impregnated prior to mating with scrim 33 and application of outer wrapping 31. This may be accomplished by the method using the apparatuses illustrated in FIGS. 3 and 5 resulting in a liner 21 and 74 as illustrated in FIGS. 2 and 7.

While felt layers 23 and 28 are formed into tubes by stitching and/or taping, any of the conventionally known methods for forming felt or other resin impregnable material into tubes is suitable. For example, tubes can be formed by use of various glues or adhesives as well as flame bonding. Tape may be applied to inner felt layer 23 and inner impermeable layer 22 by applying an adhesive strip or extruding a layer of polymeric material in order to seal the butted edges of the felt material and the holes formed in layer 22 during a sewing operation.

Referring now to FIG. 3, a method for continuously forming a length of a tube or resin impregnable material with a sealed inner impermeable layer is shown. A roll of coated felt 36 having a continuous length of felt 37 with an impermeable layer 38 is fed over a directional roller 39 in flat form with coated side facing roller 39 to a tube forming device 41.

Tube forming device 41 includes a tubular support frame 42 having a proximal end 42a and a distal end 42b and a film deformer 40. A seaming device 43 that may be a sewing and taping machine, gluing machine or flame bonding apparatus is mounted above support frame 42. Felt 37 with impermeable layer 38 facing roller 39 is fed in the direction of an arrow A to the proximal end of tube forming device 41 where it is deflected by deflector 40 and wrapped around support frame 42 and seamed into a tube 44 along a seam line 46 with felt 37 on the inside and impermeable layer 38 on the outside. Tube 44 then passes a taping device 47 where a tape 48 is placed over seam line 46 to form an impermeable coated taped tube member 45.

Taped tube member 45 then continues to travel along tubular support frame 42 to an inverter ring 49 at the distal end of support frame 42. Taped tube 45 is then everted into tubular support frame 42 so that impermeable layer 38 is now on the inside of tube 45 as it is withdrawn from the proximal end of tubular support frame 42 along a line defined by an arrow B. At this point everted tube 45 has the structure illustrated in cross-section in FIG. 4 with impermeable layer 38 on the inside and felt layer 37 on the outside. Tube 45 is then stored for further use or may be passed directly to a resin impregnation step and reinforcement as shown in FIG. 5 prior to final wrapping.

FIG. 5 illustrates in schematic impregnation of a supply 51 of taped tub 45. Here, tube 45 is pulled in a direction indicated by arrow C by a pair of rubber covered pulling rollers 52 and 53 into an open top resin tower 54. Resin tower 54 is filled to a predetermined level with a curable thermoset resin 57 to form an impregnated or wet-out tube 55. Tube 45 passes over roller 53 and down the full height of tower 54 to a bottom roller 59 that turns tube 45 in an upward direction to a pair of calibration rollers 61 and 62. Tower 54 is between about six to fourteen feet in height, but can be any height sufficient to provide a pressure head sufficient to wet out and impregnate the outer impregnable layer of tube 45. The height necessary to provide sufficient head to impregnate the impregnable material is dependent on the viscosity of the resin, the thickness of the impregnable material and the speed through the tower.

At this time, impregnated tube 55 exiting tower 54 in the direction of an arrow D is ready for adding the reinforcing scrim and final wrapping with an outer impermeable coating. Also shown in FIG. 5 adjacent to tower 54 is a scrim supply 50 and a wrapping and sealing station 63. Scrim supply 50 includes a roll 75 of longitudinal reinforcing scrim 76. Scrim 76 is fed up over a tension bar or roller 77 and into contact with the lower portion of wetout tube 55. Scrim 76 is kept at a sufficient tension as it passes over tension bar 77 prior to contact with wet out tube 55 to avoid any slack and to achieve effective reinforcement. Resin impregnated tube 55 and scrim 76 are then pulled along in a direction indicated by an arrow D' into former pipe 64 of film wrapping and sealing station 63 and tube 72 of impermeable material is everted onto impregnated tube 55 and scrim 76 to form a wrapped tube 74 having impermeable outer wrapping 72 with an edge seal 73 as shown in cross-section in FIG. 7. Wrapped tube 74 is pulled by a pair of final pulling rollers 79 and 81 and fed along an arrow F to a refrigerated truck for shipment to an installation site.

Film wrapping and sealing station 63 shown in FIG. 5 includes a former pipe 64 having an inlet end 64a and an outlet end 64b and an edge sealer 65 positioned above the mid-section of former pipe 64. A roll 66 of a resin impermeable film material 67 that is to be wrapped about impregnated tube 55 as it is fed in a direction indicated by an arrow D' into former pipe 64. Resin impermeable film material 67 is fed from roll 66 about a series of direction rollers 68a - e and pulled by a pair of drive rollers 69a and 69b as film 67 is fed over rollers 70a - d to former pipe 64. A deflector 71 and onto former pipe 64 prior to being fed into edge sealer 65 to form film 67 into a tube 72 with an edge seal 73 extending outwardly therefrom. Tube 72 of impermeable material moving along former pipe 64 is pulled in a direction indicated by an arrow E to inlet end 64a of former pipe 64 whereupon tube 72 is continuously everted into the interior of former pipe 64 and onto impregnated tube 55 and scrim 76 and pulled in the opposite direction indicated by a dashed arrow F.

Referring to FIG. 6, a cross-sectional view through sealer 65 and former pipe 64 along line 6-6 in FIG. 6 is shown. Sealer 65 forms edge seal 73 in film tube 72 as film tube 72 passes over the outside of former pipe 64. Once tube 72 is everted, edge seal 73 is now inside wrapped wet-out tube 74 as it is pulled from outlet end 64b of forming pipe 68. Outer impermeable film 72 may be applied prior to or after wet-out. In the case where this is prior to wet out, tube 45 prepared as shown in FIG. 3 is fed directly to tube forming assembly in FIG. 5 and provides liner 74 shown in cross-section in FIG. 7.

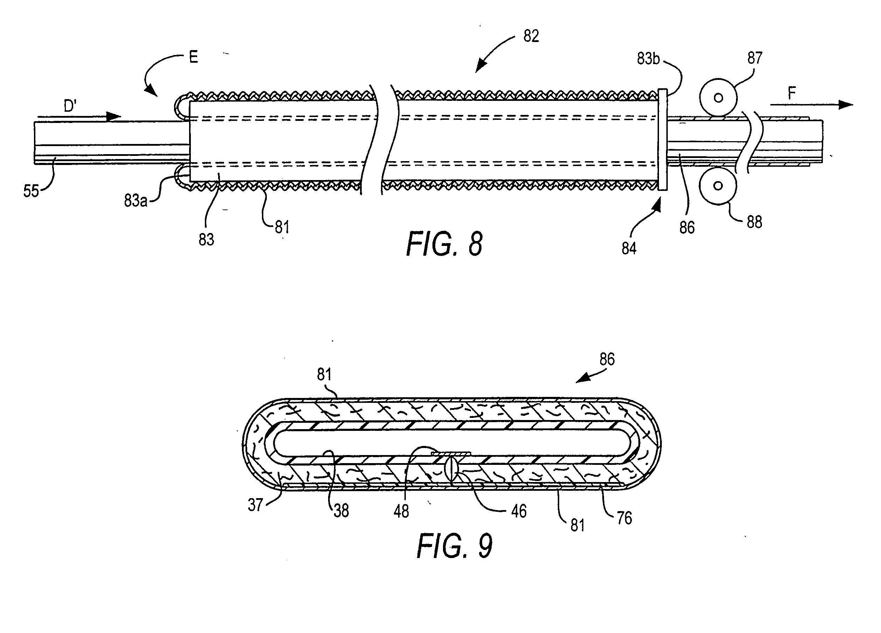

FIG. 8 illustrates an alternative apparatus for wrapping an outer impermeable tube 81 about impregnated tube 55 is shown generally as 82. Here tube 55 may be impregnated in the same manner as described in connection with tower 57 as shown in FIG. 5, or into an open resin tank with compression rollers. Tube 55 is then fed in a direction of arrow D'into a stuffer pipe 83 having an inlet end 83a and an outlet end 83b. Reference numerals as used in FIG. 5 are applied to identical elements here.

A supply of a flexible impermeable tube 81 is loaded onto the outside surface of stuffer pipe 83 having an inlet end 83a and an outlet end 83b. Impregnated tube 55 leaving resin tank 53 is fed into inlet end 83a of stuffer pipe 83. As tube 55 enters inlet end 83a of stuffer pipe 83, impermeable tube 81 is pulled off the outside of stuffer pipe 83 and everted about inlet end 83a into the inside of stuffer pipe 83 to envelope impregnated tube 55 as it leaves outlet end 83b. This forms a complete liner 86 having inner impermeable layer 38 and outer impermeable coating 81. Tube 86 with outer coating 81 is removed from outlet end 83b of stuffer tube 83 by a pair of drive rollers 87 and 88, or other pulling device such as tractors, in a direction of an arrow F. When an extruded tube is used in this embodiment, there is no seam in outer impermeable coating 81. The sole limitation of preparing tube 86 in this manner is the length of impermeable tube 81 that can be placed on stuffer tube 83. It has been found that about 304m (1,000 feet) of an impermeable tube can be compressed onto a stuffer tube of about 6.1m (20 feet) in length. Longer lengths can be stored on longer stuffer tubes.

FIG. 9 is cross-section of finished CIPP liner 86 as it exits stuffer tube 83. Liner 86 includes inner tubular member of resin absorbent material 37 having an impermeable inner coating 38 sealed with a tape 48 as described in connection with FIG.3. After exiting stuffer tube 83, liner 86 includes outer tubular wrapping 81. In view of the fact that tubular wrapping 81 is a previously extruded tube, outer wrapping 81 does not have any seams as liner 21 in FIG. 2 or liner 74 in FIG. 7.

Once at the installation site, reinforced and wrapped impregnated tube 74 or 86 having inner impermeable layer 38 and outer impermeable wrapping 67 or 81 is ready for installation by the pull-in-and-inflate method. This method is fully described in U.S. Patent No. 4,009,063, the contents of which are incorporated herein by reference. In the case of installation by the pull-in-and-inflate method, a separate eversion bladder is not necessary to inflate the liner due to the presence of inner impermeable layer 38. By proper selection of materials for inner impermeable layer 38, such as polypropylene, curing can be done with steam introduced into the liner 74 once in position in the existing conduit.

As can be readily seen, there is provided a convenient method of increasing the longitudinal strength of a flexible cured in place liner having inner and outer impermeable layers. By placing a scrim having greater strength in the warp direction on the bottom of the lay flat liner, a flexible cured in place liner of increased potential longitudinal strength is obtained. This allows for pulling in long lengths of liners or liners of substantially larger than the 8 inches typically utilized for main lines and conventional sanitary sewers without experiencing unwanted stretch of the liner. The reinforcing scrim can be formed of any high-strength low-elongation fibers, such as glass, polyester, polyethylene, fibulated polypropylene, nylon, carbon, Aramid and even steel. The scrim may be woven or non-woven, but preferably is woven. It can be formed of any continuous, flexible, high strength and low elongation fabrics or films, since they will not affect the impregnation process and circumferential expansion of the finished liner. The ease of fabrication allows for the continuous assembly of the longitudinally reinforced liner from plain felt supplies in a continuous manner by the apparatus disclosed.

The tube prepared in accordance with the process described in connection with FIG. 3 is then readily impregnated in an open top resin tower and enveloped with the reinforcing scrim within an impermeable wrapping as described in connection with the apparatus shown in FIG. 5. The smooth outer surface renders the liner ready for pull-in-and-inflate installation.

It will thus be seen that the objects set forth above, among those made apparent from the preceding description, are efficiently attained and, since certain changes may be made in carrying out the above process, in the described product, and in the construction(s) set forth without departing from the scope of the invention, it is intended that all matter contained in the above description and shown in the accompanying drawing(s) shall be interpreted as illustrative and not in a limiting sense.

## Claims

1. A method of preparation of a longitudinally reinforced cured in place liner, comprising:
providing a first tubular member of a resin impregnable material (44) in lay flat condition;
impregnating the resin impregnable material (44) with resin;
placing a scrim (76) having greater strength in the warp direction on at least a portion of one flattened surface of the impregnated tubular member (55); and
placing a resin impermeable material (72) over the impregnated tubular member (55) with the scrim (76) between the impregnated tubular member (55) and the outer impermeable material (72).

2. The method of claim 1, wherein the scrim (76) is applied to the bottom surface of the flattened tubular member (55).

3. The method according to any of claims 1-2, wherein the outer impermeable material (72) is placed about the first tubular member by:
continuously providing a tube of impermeable material (72) moving in a first direction; and
everting the tube of impermeable material (72) to envelope the inner tubular member (55) as the inner tubular member (55) moves in the opposite direction to form a wrapped tubular liner (74) with resin impregnable material (44) and reinforcing scrim (76) encapsulated between the tubular member (55) and the outer impermeable material (72).

4. The method of claim 1-3, wherein the first tubular member (44) has an inner impermeable layer.

5. The method according to any of claims 1-4, including the step of forming at least one additional tubular member of resin impregnable material about the first tubular member prior to impregnating the resin impregnable material with resin.

6. The method according to any of claims 1-5, wherein the step of impregnating the resin impregnable material (44) includes passing the first inner tubular member through a resin bath (54) prior to positioning the scrim (76) on the resin impregnable material (55).

7. A cured in place liner, comprising:
a first tubular member of a resin impregnable material (23) in lay flat condition having;
a reinforcing scrim (33) having greater strength in the warp direction positioned on at least a portion of one surface of the flattened first tubular member so as not to interfere with radial expansion of the liner; and
an outer resin impermeable layer (31) disposed about the tubular member and scrim.

8. The cured in place liner of claim 7, wherein the scrim (33) is disposed on the bottom surface of the flattened tubular member (23).

9. The cured in place liner of claim 7-8, wherein the resin impregnable material (23) is wet out with resin.

10. The cured in place liner according to any of claims 7-9, wherein the tubular member (23) has an inner impermeable layer (22).

11. The cured in place liner of claim 10, wherein the inner impermeable layer (22) is bonded to the impregnable material (23).

12. The cured in place liner according to any of claims 7-11, wherein the tubular member (23) is stitched to form a tube.

13. The cured in place liner according to any of claims 7-12, wherein the outer impermeable material (31) is a film formed into a tube with an edge seal (32) and inverted over the tubular members to place the edge seal (32) on the inside of the inverted material (31).

14. The cured in place liner to any of claims 7-13, including at least one additional tubular member (28) of resin impregnable material about the first tubular member (23).

## Patentansprüche

1. Verfahren zur Herstellung einer vor Ort ausgehärteten Auskleidung, das Folgendes umfasst:
das Bereitstellen eines ersten röhrenförmigen Elements aus einem mit Harz imprägnierbaren Werkstoff (44) in flachgelegtem Zustand,
das Imprägnieren des mit Harz imprägnierbaren Werkstoffs (44) mit Harz,
das Anordnen eines Geleges (76), das in der Kettenrichtung eine größere Festigkeit hat, auf wenigstens einem Abschnitt einer abgeflachten Oberfläche des imprägnierten röhrenförmigen Elements (55) und
das Anordnen eines für Harz undurchlässigen Werkstoffs (72) über dem imprägnierten röhrenförmigen Element (55), wobei sich das Gelege (76) zwischen dem imprägnierten röhrenförmigen Element (55) und dem äußeren undurchlässigen Werkstoff (72) befindet.

2. Verfahren nach Anspruch 1, wobei das Gelege (76) auf die untere Fläche des abgeflachten röhrenförmigen Elements (55) aufgebracht wird.

3. Verfahren nach einem der Ansprüche 1 bis 2, wobei der äußere Werkstoff (72) durch Folgendes um das erste röhrenförmige Element angeordnet wird:
das fortlaufende Bereitstellen einer Röhre aus undurchlässigem Werkstoff (72), die sich in einer ersten Richtung bewegt, und
das Umwenden der Röhre aus undurchlässigem Werkstoff (72), um das innere röhrenförmige Element (55) zu umhüllen, wenn sich das innere röhrenförmige Element (55) in der entgegengesetzten Richtung bewegt, um eine ummantelte röhrenförmige Auskleidung (74) zu formen, wobei der mit Harz imprägnierbare Werkstoff (44) und das Verstärkungsgelege (76) zwischen dem röhrenförmigen Element (55) und dem äußeren undurchlässigen Werkstoff (72) eingekapselt sind.

4. Verfahren nach einem der Ansprüche 1 bis 3, wobei das erste röhrenförmige Element (44) eine innere undurchlässige Lage hat.

5. Verfahren nach einem der Ansprüche 1 bis 4, das den Schritt des Formens von wenigstens einem zusätzlichen röhrenförmigen Element aus einem mit Harz imprägnierbaren Werkstoff um das erste röhrenförmige Element vor dem Imprägnieren des mit Harz imprägnierbaren Werkstoffs mit Harz einschließt.

6. Verfahren nach einem der Ansprüche 1 bis 5, wobei der Schritt des Imprägnierens des mit Harz imprägnierbaren Werkstoffs (44) das Hindurchführen des ersten inneren röhrenförmigen Elements durch ein Harzbad (54) vor dem Anordnen des Geleges (76) auf dem mit Harz imprägnierbaren Werkstoff (55) einschließt.

7. Vor Ort ausgehärtete Auskleidung, die Folgendes umfasst:
ein erstes röhrenförmiges Element aus einem mit Harz imprägnierbaren Werkstoff (23) in flachgelegtem Zustand, das Folgendes aufweist:
ein Verstärkungsgelege (33), das in der Kettenrichtung eine größere Festigkeit hat, das auf wenigstens einem Abschnitt einer abgeflachten Oberfläche des ersten röhrenförmigen Elements angeordnet ist, so dass es die radiale Ausdehnung der Auskleidung nicht stört, und
eine äußere für Harz undurchlässige Lage (31), die um das röhrenförmige Element und das Gelege angeordnet ist.

8. Vor Ort ausgehärtete Auskleidung nach Anspruch 7, wobei das Gelege (33) auf der unteren Fläche des abgeflachten röhrenförmigen Elements (23) angeordnet ist.

9. Vor Ort ausgehärtete Auskleidung nach Anspruch 7 bis 8, wobei der mit Harz imprägnierbare Werkstoff (23) mit Harz vorgenetzt ist.

10. Vor Ort ausgehärtete Auskleidung nach einem der Ansprüche 7 bis 9, wobei das röhrenförmige Element (23) eine innere undurchlässige Lage (22) hat.

11. Vor Ort ausgehärtete Auskleidung nach Anspruch 10, wobei die innere undurchlässige Lage (22) an den imprägnierbaren Werkstoff (23) gebunden ist.

12. Vor Ort ausgehärtete Auskleidung nach einem der Ansprüche 7 bis 11, wobei das röhrenförmige Element (23) geheftet ist, um eine Röhre zu bilden.

13. Vor Ort ausgehärtete Auskleidung nach einem der Ansprüche 7 bis 12, wobei der äußere undurchlässige Werkstoff (31) ein Film ist, der mit einer Kantenversiegelung (32) zu einer Röhre geformt und über die röhrenförmigen Elemente umgewendet ist, um die Kantenversiegelung (32) auf der Innenseite des umgewendeten Werkstoffs (31) anzuordnen.

14. Vor Ort ausgehärtete Auskleidung nach einem der Ansprüche 7 bis 13, die wenigstens ein zusätzliches röhrenförmiges Element (28) aus einem mit Harz imprägnierbaren Werkstoff um das erste röhrenförmige Element (23) einschließt.

## Revendications

1. Procédé de préparation d'une gaine durcie sur place renforcée longitudinalement, comprenant les étapes suivantes:
former un premier élément tubulaire constitué d'un matériau pouvant être imprégné de résine (44) dans une condition aplatie;
imprégner le matériau pouvant être imprégné de résine (44) avec de la résine;
placer un canevas (76) qui présente une résistance plus importante dans la direction de la chaîne sur au moins une partie d'une surface aplatie de l'élément tubulaire imprégné (55); et
placer un matériau imperméable à la résine (72) sur l'élément tubulaire imprégné (55) avec le canevas (76) qui est disposé entre l'élément tubulaire imprégné (55) et le matériau extérieur imperméable (72).

2. Procédé selon la revendication 1, dans lequel le canevas (76) est appliqué sur la surface inférieure de l'élément tubulaire aplati (55).

3. Procédé selon l'une quelconque des revendications 1 à 2, dans lequel le matériau imperméable extérieur (72) est placé autour du premier élément tubulaire en:
procurant de façon continue un tube d'un matériau imperméable (72) qui se déplace dans une première direction; et en
retournant le tube de matériau imperméable (72) de manière à envelopper l'élément tubulaire intérieur (55) lorsque l'élément tubulaire intérieur (55) se déplace dans la direction opposée pour former une gaine tubulaire enrobée (74) avec un matériau pouvant être imprégné de résine (44) et un canevas de renforcement (76), qui est coincée entre l'élément tubulaire (55) et le matériau imperméable extérieur (72).

4. Procédé selon l'une quelconque des revendications 1 à 3, dans lequel le premier élément tubulaire (44) comprend une couche intérieure imperméable.

5. Procédé selon l'une quelconque des revendications 1 à 4, comprenant l'étape qui consiste à former au moins un élément tubulaire supplémentaire de matériau pouvant être imprégné de résine autour du premier élément tubulaire avant d'imprégner le matériau pouvant être imprégné de résine avec de la résine.

6. Procédé selon l'une quelconque des revendications 1 à 5, dans lequel l'étape d'imprégnation du matériau pouvant être imprégné de résine (44) comprend le passage du premier élément tubulaire à travers un bain de résine (54) avant de positionner le canevas (76) sur le matériau pouvant être imprégné de résine (55).

7. Gain durcie sur place, comprenant:
un premier élément tubulaire constitué d'un matériau pouvant être imprégné de résine (23) dans une condition aplatie, comportant
un canevas de renforcement (33) dont la résistance est plus élevée dans la direction de la chaîne et qui est positionné sur au moins une partie d'une surface du premier élément tubulaire aplati de manière à ne pas gêner la dilatation radiale de la gaine; et
une couche extérieure imperméable à la résine (31) qui est disposée autour de l'élément tubulaire et du canevas.

8. Gaine durcie sur place selon la revendication 7, dans laquelle le canevas (33) est disposé sur la surface inférieure de l'élément tubulaire aplati (23).

9. Gaine durcie sur place selon les revendications 7 et 8, dans laquelle le matériau pouvant être imprégné de résine (23) est mouillé avec de la résine.

10. Gaine durcie sur place selon l'une quelconque des revendications 7 à 9, dans laquelle l'élément tubulaire (23) comprend une couche intérieure imperméable (22).

11. Gaine durcie sur place selon la revendication 10, dans laquelle la couche intérieure imperméable (22) est liée au matériau pouvant être imprégné (23).

12. Gaine durcie sur place selon l'une quelconque des revendications 7 à 11, dans laquelle l'élément tubulaire (23) est agrafé pour former un tube.

13. Gaine durcie sur place selon l'une quelconque des revendications 7 à 12, dans laquelle le matériau extérieur imperméable (31) est un film qui est formé en un tube avec un joint de bord (32) et qui est retourné sur les éléments tubulaires de manière à placer le joint de bord (32) sur la face intérieure du matériau retourné (31).

14. Gaine durcie sur place selon l'une quelconque des revendications 7 à 13, comprenant au moins un élément tubulaire supplémentaire (28) constitué d'un matériau pouvant être imprégné de résine autour du premier élément tubulaire (23).
